# EUROPEAN PATENT APPLICATION

(11) **EP 2 833 336 A1**
(43) Date of publication of application: **04.02.2015**
(21) Application number: 12873466.2
(22) Date of filing: 29.03.2012
(51) Int. Cl.: G08G 1/16

(54) **DRIVING ASSISTANCE SYSTEM**

(71) Applicant: Toyota Jidosha Kabushiki Kaisha, Toyota-shi, Aichi 471-8571 (JP)
(72) Inventor: KAWAMATA, Shinya, Toyota-shi Aichi 471-8571 (JP); OZAKI, Osamu, Toyota-shi Aichi 471-8571 (JP); KAMINADE, Takuya, Toyota-shi Aichi 471-8571 (JP)
(74) Representative: Smith, Samuel Leonard
(86) International application number: PCT/JP2012/058383
(87) International publication number: WO 2013/145216

(57) **Abstract**

In order to provide a driving assistance device capable of inhibiting execution of driving assistance in a scene other than an intersection at which the driving assistance is required, a driving assistance device 2 is provided with a microphone 32 mounted on an own vehicle 1 and configured to detect sound information around the own vehicle 1, an assistance executing unit 80 configured to execute the driving assistance, and an assistance determining unit 76 configured to determine whether the driving assistance is executed and determine an assistance level at the time of executing the driving assistance, based on a reverberating sound of a sound emitted from the own vehicle 1 and included in the sound information detected by the microphone 32. According to this, the assistance executing unit 80 can provide just enough driving assistance according to visibility of a crossing road 92 from a travel road 91 and inhibit the execution of the driving assistance in a scene other than an intersection 93 at which the driving assistance is required.

## Description

### Field

The present invention relates to a driving assistance device.

### Background

Recently, a driving assistance device which provides various pieces of driving assistance to a driver of a traveling vehicle is suggested. For example, a detecting device of an intersection with a stop sign disclosed in Patent Literature 1 determines whether an intersection in front of an own vehicle is the intersection at which temporal stop is required based on an approaching state of the own vehicle to the intersection and a travel state of another vehicle and issues a warning to the driver according to the approaching state of the own vehicle to the intersection with a stop sign.

### Citation List

### Patent Literature

Patent Literature 1: Japanese Patent Application Laid-open No. 2007-164223

### Summary

### Technical Problem

However, another vehicle stops according to a traffic light also at the intersection with a traffic light and this shows the travel state similar to that at the intersection with a stop sign. Therefore, it is very difficult to determine with a high degree of accuracy by using the travel state of another vehicle whether this is the intersection at which entrance with greater care is required and the driving assistance is required such as the intersection with a stop sign.

The present invention is achieved in view of above circumstances and an object thereof is to provide the driving assistance device capable of inhibiting execution of the driving assistance in a scene other than the intersection at which the driving assistance is required. Solution to Problem

In order to solve the above mentioned problem and achieve the object, a driving assistance device according to the present invention includes a microphone mounted on an own vehicle and configured to detect sound information around the own vehicle; a driving assistance means configured to execute driving assistance; and an assistance determining means configured to determine whether the driving assistance is executed and determine an assistance level at the time of executing the driving assistance, based on a reverberating sound of a sound emitted from the own vehicle and included in the sound information detected by the microphone.

Further, in the driving assistance device, it is preferable that the assistance determining means determines to execute the driving assistance at the time it is determined that there is an obstacle around the own vehicle, based on the reverberating sound of the sound emitted from the own vehicle and included in the sound information by the microphone.

Further, in the driving assistance device, it is preferable that the assistance determining means determines to execute the driving assistance at the time it is determined that there is the obstacle and determines not to execute the driving assistance at the time it is determined that there is no obstacle.

Further, in the driving assistance device, it is preferable that the assistance determining means determines to increase the assistance level at the time it is determined that there is the obstacle as compared to a case in which it is determined that there is no obstacle. Advantageous Effects of Invention

The driving assistance device according to the present invention has an effect that it is possible to inhibit the execution of the driving assistance in the scene other than the intersection at which the driving assistance is required.

### Brief Description of Drawings

FIG. 1 is a schematic diagram of a vehicle provided with a driving assistance device according to an embodiment.
FIG. 2 is a schematic diagram of an interior of the vehicle illustrated in FIG. 1.
FIG. 3 is a view seen in a direction of arrow A-A in FIG. 2.
FIG. 4 is a detailed view of a part B in FIG. 3.
FIG. 5 is a configuration diagram of a substantial part of the driving assistance device illustrated in FIG. 1.
FIG. 6 is an illustrative diagram of driving assistance at the time of entrance to an intersection.
FIG. 7 is an illustrative diagram in a case in which an environment around the vehicle is determined based on sound information detected by a microphone.
FIG. 8-1 is an illustrative diagram of a case in which it is determined whether there is a shielding material based on change in frequency property, the illustrative diagram of a state without the shielding material.
FIG. 8-2 is an illustrative diagram of the case in which it is determined whether there is the shielding material based on the change in frequency property, the illustrative diagram of a state with the shielding material.
FIG. 9-1 is an illustrative diagram of a case in which it is determined whether there is the shielding material based on a correlation value of sounds detected by a plurality of microphones, the illustrative diagram of a state without the shielding material.
FIG. 9-2 is an illustrative diagram of the case in which it is determined whether there is the shielding material based on the correlation value of the sounds detected by a plurality of microphones, the illustrative diagram of a state with the shielding material.
FIG. 10 is a flow diagram when the driving assistance device according to the embodiment provides the driving assistance.

### Description of Embodiments

An embodiment of a driving assistance device according to the present invention is hereinafter described in detail with reference to the drawings. Meanwhile, the present invention is not limited by the embodiment. Components in the following embodiment include a component easily replaceable by one skilled in the art or a substantially identical component.

### [Embodiment]

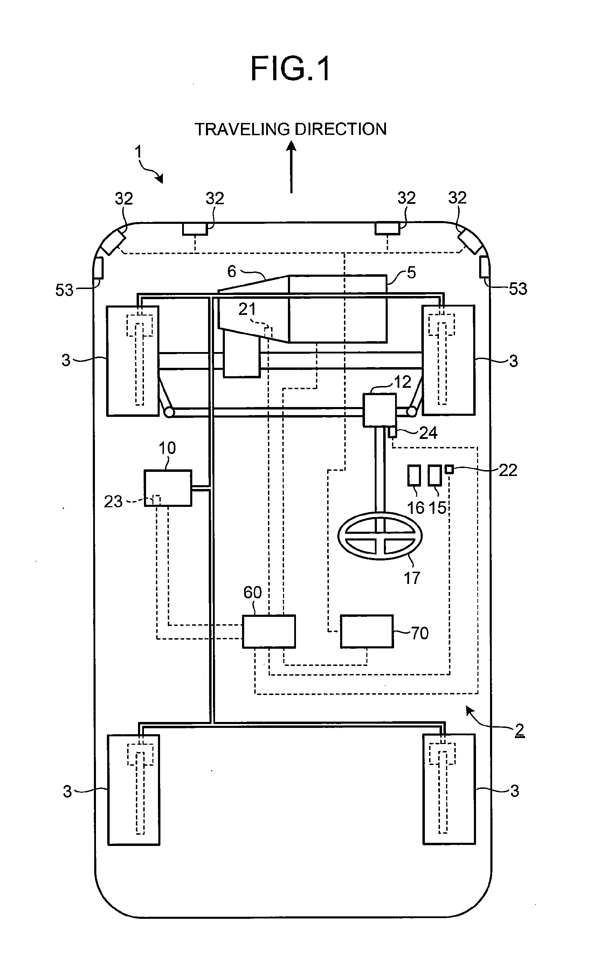

FIG. 1 is a schematic diagram of a vehicle provided with a driving assistance device according to an embodiment. A vehicle 1 provided with a driving assistance device 2 according to the embodiment equipped with an engine 5 being an internal-combustion engine as a power source can travel by transmission of power generated by the engine 5 to a wheel 3 through a driving device such as a transmission device 6. The vehicle 1 is provided with a brake device being braking means which puts a brake on the traveling vehicle 1 by putting a brake on the wheel 3 and is provided with a brake hydraulic control device 10 which controls hydraulic pressure when the brake device is operated. The driving device is provided with a vehicle speed sensor 21 being vehicle speed detecting means which detects a vehicle speed through detecting a rotational speed of an output shaft of the driving device.

The vehicle 1 is provided with an accelerator pedal 15 and a brake pedal 16 used when a driver performs driving operation; out of them, in the vicinity of the accelerator pedal 15, an accelerator sensor 22 which detects an operation amount of the accelerator pedal 15 is provided. The brake hydraulic control device 10 is provided with a brake pressure sensor 23 which detects an operation amount of the brake pedal 16 by detecting brake pressure being the hydraulic pressure at the time of operation of the brake pedal 16.

Further, the vehicle 1 is provided with a steering wheel 17 used when the driver steers a steered wheel, the steering wheel 17 being connected to an EPS (electric power steering) device 12 which is an electric power steering device. According to this, the steering wheel 17 is provided so as to be able to steer a front wheel being the steered wheel through the EPS device 12. The EPS device 12 provided in this manner is provided with a rudder angle sensor 24 being rudder angle detecting means which detects a rudder angle being a rotational angle of the steering wheel 17.

The vehicle 1 is provided with a microphone 32 as environment information obtaining means which obtains environment information around the own vehicle 1. The microphone 32 arranged in the vicinity of a front end of the vehicle 1 is provided as sound information detecting means which detects a state around the vehicle 1 or a state of a moving object which moves on a road crossing in front of the vehicle 1 to a road on which the vehicle 1 travels by detecting sound information around the vehicle 1. A plurality of microphones 32 is arranged on a bumper and the like on a front side of the vehicle 1, for example, and a plurality of microphones 32 can detect the sound information of a surrounding area including a direction of a sound. According to this, the microphone 32 can detect presence of a shielding material around the vehicle 1 and presence of the moving object such as an approaching vehicle moving in a blind area on the road crossing at an intersection located in front of the vehicle 1 based on the sound information transmitted from around the vehicle 1 and a reverberating sound of the sound emitted from the vehicle 1.

A notifying lamp 53 which notifies the moving object located anterior and lateral to the vehicle 1 of presence of the own vehicle 1 is provided on a side surface of the bumper on the front side of the vehicle 1. The notifying lamp 53 is arranged on each of right and left side surfaces in the vicinity of the front end of the vehicle 1 and can emit light in a forward and lateral direction of the vehicle 1 by lighting.

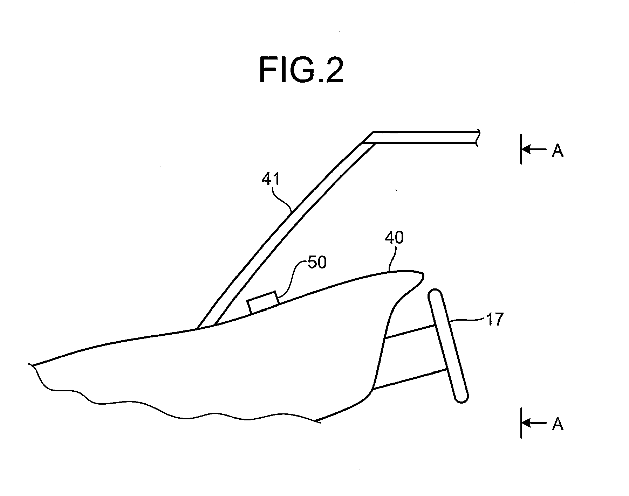

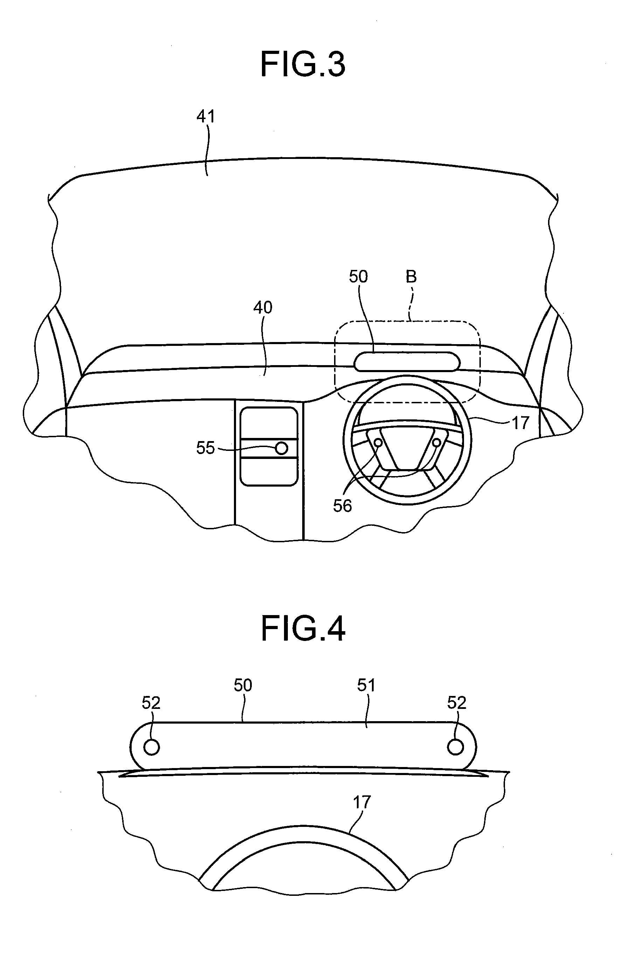

FIG. 2 is a schematic diagram of an interior of the vehicle illustrated in FIG. 1. FIG. 3 is a view seen in a direction of arrow A-A in FIG. 2. FIG. 4 is a detailed view of a part B in FIG. 3. In the vehicle, a warning device 50 which forms driving assistance means to notify the driver of predetermined information is arranged on a dashboard 40; in detail, this is arranged in the vicinity of a lower end of a front window 41 on the dashboard 40. The warning device 50 includes a display unit 51 which visually notifies the driver of the information and a buzzer 52 which notifies the driver of the information by the sound. Since the warning device 50 includes the display unit 51 and the buzzer 52 in this manner, this can provide driving assistance by notifying using the sound and light.

An operation mode selector switch 55 which switches an operation mode of the driving assistance device 2 according to this embodiment is provided in the vehicle. The driving assistance device 2 is such that the operation mode can be switched to an auto mode in which this automatically operates and a manual mode in which the driver turns ON/OFF the operation, and the operation mode selector switch 55 serves as a switch to switch between the auto mode and the manual mode. A steering switch 56 which can be turned ON/OFF when the operation mode selector switch 55 is switched to the manual mode is arranged on the steering wheel 17. Out of them, the steering switch 56 is provided as assistance requesting means which switches between operation and stop of the driving assistance by driver's choice.

The engine 5, the transmission device 6, the brake hydraulic control device 10, the EPS device 12, the vehicle speed sensor 21, the accelerator sensor 22, the brake pressure sensor 23, the rudder angle sensor 24, the microphone 32, the warning device 50, the notifying lamp 53, the operation mode selector switch 55, and the steering switch 56 are connected to an ECU (electronic control unit) mounted on the vehicle 1 to control each unit of the vehicle 1. A travel control ECU 60 which performs travel control of the vehicle 1 and a driving assistance ECU 70 which performs driving assistance control being the control to assist driving of the driver while the vehicle 1 travels are provided as the ECUs.

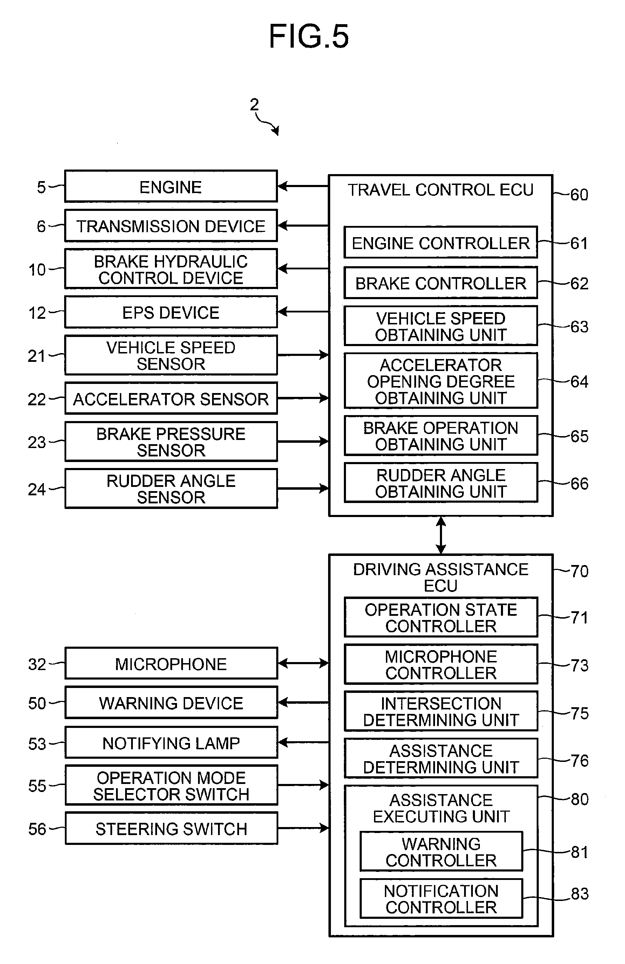

FIG. 5 is a configuration diagram of a substantial part of the driving assistance device illustrated in FIG. 1. Out of the units connected to the ECUs, the devices operated when the vehicle 1 travels such as the engine 5 and the brake hydraulic control device 10, and the detecting means which detects a travel state of the vehicle 1 such as the vehicle speed sensor 21 are connected to the travel control ECU 60. The detecting means which detects a state of the driving operation by the driver such as the accelerator sensor 22, the brake pressure sensor 23, and the rudder angle sensor 24 is also connected to the travel control ECU 60. In contrast, the devices used for the driving assistance control such as the warning device 50, the operation mode selector switch 55, and the steering switch 56 is connected to the driving assistance ECU 70.

The travel control ECU 60 and the driving assistance ECU 70 are connected to each other so as to be able to exchange information and signals. Hardware configurations of the travel control ECU 60 and the driving assistance ECU 70 are well-known configurations provided with a processing unit including a CPU (central processing unit) and the like, a storage unit such as a RAM (random access memory) and the like, so that the description thereof is omitted.

Out of the ECUs, the travel control ECU 60 includes an engine controller 61 which performs operation control of the engine 5, a brake controller 62 which controls braking force by controlling the brake hydraulic control device 10, a vehicle speed obtaining unit 63 being vehicle speed obtaining means which obtains information of the vehicle speed from a detection result by the vehicle speed sensor 21, an accelerator opening degree obtaining unit 64 which obtains an accelerator operation amount being the operation amount of the accelerator pedal 15 from a detection result by the accelerator sensor 22, a brake operation obtaining unit 65 which obtains a brake operation amount being the operation amount of the brake pedal 16 from a detection result by the brake pressure sensor 23, and a rudder angle obtaining unit 66 which obtains a state of steering of the steering wheel 17 from a detection result by the rudder angle sensor 24. Out of them, the accelerator opening degree obtaining unit 64, the brake operation obtaining unit 65, and the rudder angle obtaining unit 66 are provided as driving operation obtaining means which obtains information of the driving operation of the driver.

The driving assistance ECU 70 includes an operation state controller 71 which controls an operation state of the driving assistance control based on states of the operation mode selector switch 55 and the steering switch 56, a microphone controller 73 which controls the microphone 32, an intersection determining unit 75 being intersection determining means which determines whether the vehicle 1 travels toward the intersection at which the driving assistance is required based on the travel state of the vehicle 1 and the state of the driving operation of the driver, an assistance determining unit 76 being assistance determining means which determines whether the driving assistance can be executed and determines an assistance level at the time of execution of the driving assistance based on the reverberating sound of the sound emitted from the vehicle 1 from the sound information detected by the microphone 32, and an assistance executing unit 80 which forms the driving assistance means which executes assistance to guide to avoid a risk as the driving assistance.

Furthermore, the assistance executing unit 80 included in the driving assistance ECU 70 includes a warning controller 81 which issues a warning to the driver by operating the warning device 50 and a notification controller 83 which performs control to notify surroundings of the presence of the own vehicle 1 by controlling the notifying lamp 53.

The driving assistance device 2 according to this embodiment is configured as described above; an action thereof is hereinafter described. When the vehicle 1 normally travels, each actuator of the engine 5, the brake hydraulic control device 10 and the like operates by operation of the accelerator pedal 15 and the brake pedal 16 by the driver, and the vehicle 1 travels according to the driving operation of the driver. For example, the engine controller 61 included in the travel control ECU 60 controls the engine 5 according to the accelerator operation amount obtained by the accelerator opening degree obtaining unit 64 based on the detection result by the accelerator sensor 22, thereby generating driving force according to a request by the driver.

The hydraulic pressure when the brake device is operated is generated in the brake hydraulic control device 10 by the operation of the brake pedal 16, and the brake device operates by the hydraulic pressure to generate the braking force. The brake hydraulic pressure being the hydraulic pressure generated in the brake hydraulic control device 10 in this manner when the brake pedal 16 is operated is detected by the brake pressure sensor 23 to be obtained by the brake operation obtaining unit 65. The brake operation obtaining unit 65 obtains the brake hydraulic pressure as the brake operation amount of the driver.

When the vehicle 1 travels, the travel state of the vehicle 1 is detected by the sensors provided on the units of the vehicle 1 to be used in the travel control of the vehicle 1. For example, the vehicle speed information detected by the vehicle speed sensor 21 is obtained by the vehicle speed obtaining unit 63 included in the travel control ECU 60 to be used when the travel control is performed by using the vehicle speed information.

The driving assistance device 2 according to this embodiment is capable of providing the driving assistance by providing a reminder to the driver when the vehicle 1 travels. Specifically, it is possible to provide the driving assistance when the own vehicle 1 enters the intersection at which it is required to travel with greater care than in the normal travel in order to avoid collision upon meeting suddenly with the moving object such as another vehicle moving on the road crossing to the road on which the own vehicle 1 travels.

The warning device 50 provides the driving assistance provided by the driving assistance device 2 by using the sound information detected by the microphone 32. That is to say, the driving assistance device 2 according to this embodiment controls the warning device 50 based on the sound information detected by the microphone 32 provided as the environment information obtaining means which obtains the environment information around the own vehicle 1 to issue the warning to the driver, thereby executing the driving assistance.

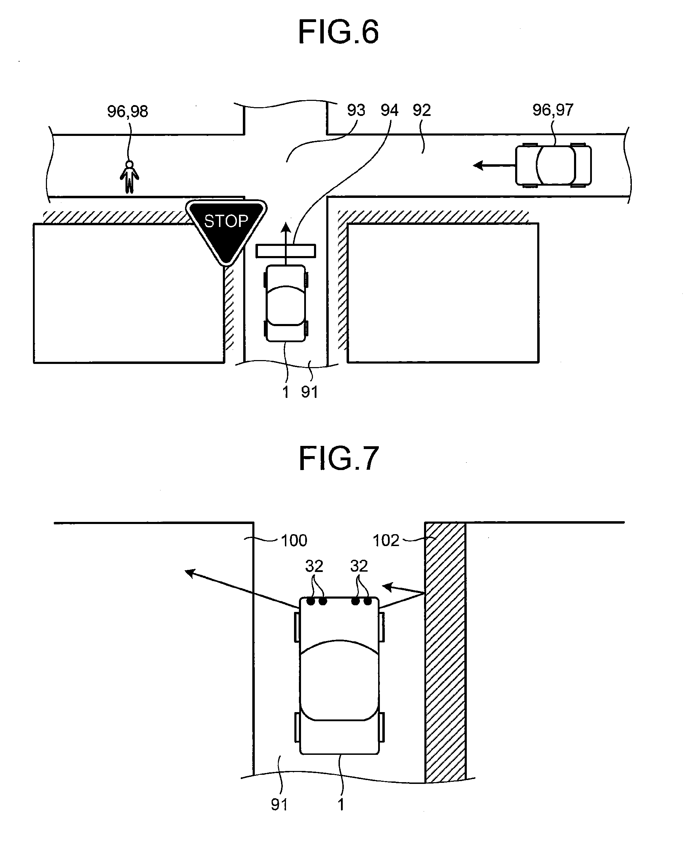

FIG. 6 is an illustrative diagram regarding the driving assistance at the time of entrance to the intersection. The driving assistance by the driving assistance device 2 is described; while the vehicle 1 travels on a travel road 91 being the road on which the own vehicle 1 travels, when there is an intersection 93 at which it is required to take care such as the intersection 93 with a stop line 94 in a traveling direction of the vehicle 1, the driving assistance is executed. It is determined based on the travel state of the vehicle 1 and the state of the driving operation of the driver whether there is the intersection 93 at which it should take greater care and the driving assistance is required in the traveling direction of the vehicle 1. Specifically, when the vehicle speed obtained by the vehicle speed obtaining unit 63 is not higher than a predetermined speed and when the accelerator operation amount obtained by the accelerator opening degree obtaining unit 64 and the brake operation amount obtained by the brake operation obtaining unit 65 are not larger than predetermined reference values, the intersection determining unit 75 included in the driving assistance ECU 70 determines that there is the intersection 93 at which the driving assistance is required.

That is to say, when the vehicle 1 enters the intersection 93 at which it is required to provide the driving assistance such as the reminder to the driver, that is to say, the intersection 93 at which it is required to travel with greater care, the driver enters there while reducing the vehicle speed and in a state in which at least one of the accelerator pedal 15 and the brake pedal 16 is fully released and the other is fully released or slightly stepped. According to this, the accelerator operation amount and the brake operation amount become predetermined reference values or smaller and the vehicle 1 slowly enters the intersection 93 in a state in which the accelerator operation amount and the brake operation amount are small and the vehicle speed is low. That is to say, the driver allows the own vehicle 1 to slowly enter the intersection 93 while confirming a situation of a moving object 96 such as an approaching vehicle 97 and a pedestrian 98 moving on a crossing road 92 crossing to the travel road 91.

When entering the intersection 93 at which the driving assistance is required, this enters in a state in which the accelerator operation amount and the brake operation amount are small and the vehicle speed is low in this manner, so that the intersection determining unit 75 determines that the vehicle 1 travels toward such intersection 93 when the travel state of the vehicle 1 and the driving state of the driver satisfy these conditions in a state other than a stopping state.

The driving assistance device 2 executes the driving assistance when it is switched to the state in which the driving assistance is operated by the operation mode selector switch 55 and the steering switch 56 in a case in which the intersection determining unit 75 determines the entrance to such intersection 93. As the driving assistance, the assistance executing unit 80 included in the driving assistance ECU 70 executes the driving assistance control such as the reminder to the driver, thereby providing the driving assistance to the driver.

For example, the sound from the moving object 96 such as the approaching vehicle 97 traveling on the crossing road 92 to approach the own vehicle 1 is detected by the microphone 32 and the driver is informed of the approach of the moving object 96 based on the detected sound information. Specifically, the microphone controller 73 included in the driving assistance ECU 70 controls the microphone 32 to detect the sound information around the own vehicle 1 and the sound information detected by the microphone 32 is obtained by the microphone controller 73.

The warning to the driver is issued by the control of the warning device 50 by the warning controller 81 included in the assistance executing unit 80. The warning controller 81 displays that there is the moving object 96 on the crossing road 92 on the display unit 51 of the warning device 50 or emit a warning sound from the buzzer 52 of the warning device 50 by controlling the warning device 50. According to this, this provides the driving assistance such as the warning and the reminder to the driver.

Furthermore, when the moving object 96 approaches the own vehicle 1 at a high speed and the like, the notification controller 83 included in the assistance executing unit 80 controls the notifying lamp 53 according to relative relationship between the own vehicle 1 and the moving object 96, thereby allowing the notifying lamp 53 to emit light. This allows the moving object 96 to recognize the presence of the own vehicle 1 and provides the reminder to the moving object 96.

In the driving assistance at the time of the entrance to the intersection 93 provided in this manner, a degree of the assistance is changed according to the state of the own vehicle 1 and the state of the moving object 96. For example, at the time of the entrance to the intersection 93, it is determined whether the driving assistance can be executed, and the assistance level at the time of the execution of the driving assistance is determined by the sound information detected by the microphone 32, then the driving assistance is controlled. When they are determined by the sound information detected by the microphone 32, the reverberating sound of the sound emitted from the vehicle 1 is detected by the microphone 32, a state of an environment around the vehicle 1 is determined by the reverberating sound, and it is determined whether the driving assistance can be executed, and the assistance level is determined.

That is to say, since the vehicle 1 travels by the power generated by the engine 5, a travel sound such as an operation sound at the time of operation of the engine 5 is generated while the vehicle 1 travels; when there is an obstacle around the vehicle 1, a part of the sound emitted by the vehicle 1 is reflected by the obstacle to be rebounded toward the own vehicle 1. Therefore, when the information of the sound emitted from the own vehicle 1 is included in the sound information detected by the microphone 32, it is determined that there is the obstacle around the own vehicle 1.

FIG. 7 is an illustrative diagram when the environment around the vehicle is determined based on the sound information detected by the microphone. For example, when there is a shielding material 102 such as a wall on one of right and left sides of the vehicle 1 and there is an open space 100 without the wall and the like on the other side, the sound emitted by the vehicle 1 is reverberated by the shielding material 102 on the side of the shielding material 102 and is dispersed on the side of the open space 100. Therefore, the sound emitted by the vehicle 1 to be reverberated by the shielding material 102 travels from the shielding material 102 toward the microphone 32. At that time, out of a plurality of microphones 32 arranged in the vicinity of the front end of the vehicle 1, the microphone 32 arranged in a position closer to the shielding material 102 is closer to the shielding material 102 than the microphone 32 arranged in a position closer to the open space 100, so that this detects the sound reverberated by the shielding material 102 faster. Therefore, it is possible to estimate the side on which the shielding material 102 is located based on a time lag between the sounds detected by a plurality of microphones 32.

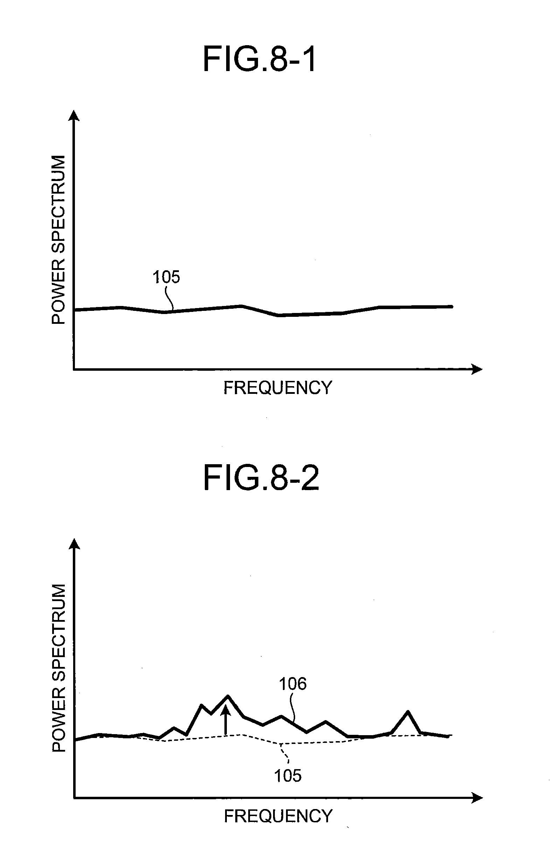

FIGS. 8-1 and 8-2 are illustrative diagrams of a case in which it is determined whether there is the shielding material based on change in frequency property; FIG. 8-1 is the illustrative diagram of a state without the shielding material and FIG. 8-2 is that of a state with the shielding material. When it is determined whether the sound emitted by the own vehicle 1 is detected from the sound information detected by the microphone 32, it is determined based on a power spectrum of the sound detected by the microphone 32. For example, in the vicinity of the intersection 93 without the shielding material 102, an engine sound and a fan sound from the own vehicle 1 are not reverberated by the shielding material 102, so that an open-time power spectrum 105 being the power spectrum of the sound detected in the vicinity of such intersection 93 is substantially flat relative to the frequency (FIG. 8-1).

On the other hand, in the vicinity of the intersection 93 at which the shielding material 102 is present, the engine sound and the like from the own vehicle 1 is reverberated by the shielding material 102, so that a spectrum of the sound emitted by the own vehicle 1 occurs in a shielded-time power spectrum 106 being the power spectrum of the sound detected in the vicinity of such intersection 93 (FIG. 8-2). In this manner, when there is the spectrum of the sound emitted from the own vehicle 1 in the sound information detected by the microphone 32, it can be estimated that there is the shielding material 102 around the own vehicle 1.

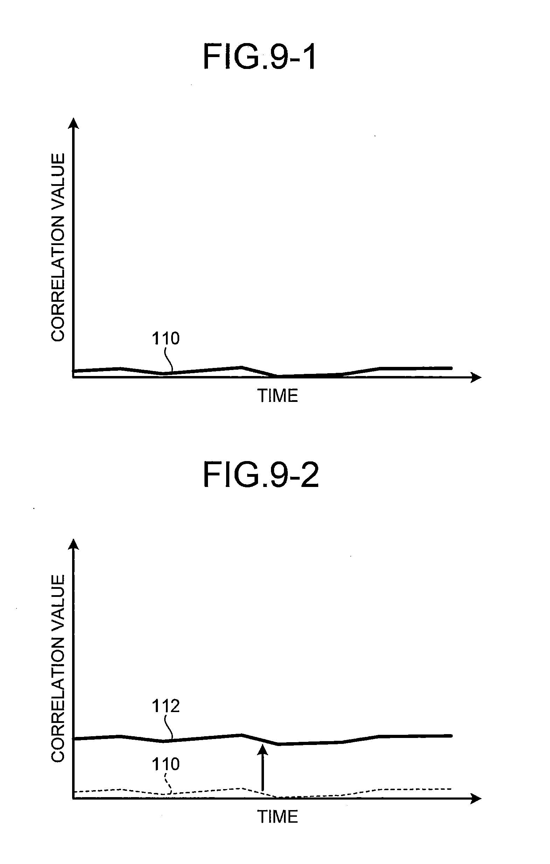

FIGS. 9-1 and 9-2 are illustrative diagrams of a case in which it is determined whether there is the shielding material based on a correlation value of the sounds detected by a plurality of microphones; FIG. 9-1 is the illustrative diagram of a state without the shielding material and FIG. 9-2 is that of a state with the shielding material. It can also be determined whether there is the shielding material 102 based on the sound information detected by the microphone 32 by the correlation value of pieces of sound information detected by a plurality of microphones 32. That is to say, in the vicinity of the intersection 93 without the shielding material 102, the engine sound and the like from the own vehicle 1 is not reverberated by the shielding material 102, so that magnitude of the sound is substantially the same in any point and difference between the pieces of sound information detected by a plurality of microphones 32 is small. Therefore, an open-time correlation value 110 being the correlation value of the pieces of sound information detected by a plurality of microphones 32 in the vicinity of such intersection 93 is approximately 0 (FIG. 9-1).

On the other hand, in the vicinity of the intersection 93 at which the shielding material 102 is present, the correlation value of the pieces of sound information detected by a plurality of microphones 32 becomes high between the microphones 32 by the reverberating sound by the shielding material 102. Therefore, a shielded-time correlation value 112 which is the correlation value of the pieces of sound information detected by a plurality of microphones 32 in the vicinity of the intersection 93 at which the shielding material 102 is present is higher than the open-time correlation value 110 (FIG. 9-2). In this manner, when the correlation value of the pieces of sound information detected by a plurality of microphones 32 is high, it can be estimated that there is the shielding material 102 around the own vehicle 1.

When the intersection determining unit 75 determines that the vehicle 1 enters the intersection 93 at which the driving assistance is required, the assistance determining unit 76 included in the driving assistance ECU 70 determines whether there is the obstacle in the vicinity of the intersection 93 such as the shielding material 102 in the vicinity of the intersection 93 based on the sound information detected by the microphone 32 as described above. That is to say, when the assistance determining unit 76 determines that there is the intersection 93 at which the driving assistance is required in the traveling direction of the vehicle 1, this determines whether the driving assistance can be executed and determines the assistance level at the time of the execution of the driving assistance according to the presence of the obstacle determined based on the sound information detected by the microphone 32.

For example, when it can be determined that there is no obstacle such as the shielding material 102 in the vicinity of the intersection 93 on the travel road 91, so that view is clear and visibility of the crossing road 92 from the travel road 91 is excellent, this determines not to execute the driving assistance or lower the assistance level. When it can be determined that there is the shielding material 102 on one side in a lateral direction of the vehicle 1 and there is the open space 100 on the other side, this determines to decrease the assistance level at the time of the execution of the driving assistance according to a direction in which the shielding material 102 is present, a distance between the own vehicle 1 and the shielding material 102 and the like. On the other hand, when it can be determined that there is the shielding material 102 in the lateral direction of the vehicle 1, so that the view is not clear and the visibility of the crossing road 92 from the travel road 91 is not excellent, this determines to execute the driving assistance with an increased assistance level. That is to say, when the assistance determining unit 76 determines that there is the shielding material 102 around the own vehicle 1, this determines to increase the assistance level as compared to a case in which it is determined that there is no shielding material 102.

In this manner, the assistance level of the driving assistance changed according to the state of the obstacle is changed according to a degree of the reminder to the driver. That is to say, in the driving assistance by emitting predetermined light by the display unit 51 of the warning device 50, the assistance level of the driving assistance is changed by changed light amount and color at the time of light emission or by a blink of the light. In more detail, the level of the driving assistance is increased by an increased amount of light, increased luminance, eye-catching color such as red, or the blinking at the time of the light emission, for example. In the driving assistance by generation of the warning sound from the buzzer 52 of the warning device 50, the assistance level of the driving assistance is changed by change in sound volume and frequency of the warning sound generated from the buzzer 52. In more detail, the level of the driving assistance is increased by raising the sound volume of the warning sound or making a pitch thereof higher, for example.

The driving assistance by the driving assistance device 2 is such that it is possible to switch between automatic execution at the time of the entrance to the intersection 93 and optional execution by the driver by switching the operation mode selector switch 55. The operation mode selector switch 55 can switch between the auto mode in which the driving assistance is automatically executed according to the state of the own vehicle 1 and the surrounding environment when the own vehicle 1 enters the intersection 93 and the manual mode in which the driver can select whether to execute the driving assistance when entering the intersection 93.

When the operation mode selector switch 55 is in the manual mode, it is possible to turn ON/OFF the driving assistance at the time of the entrance to the intersection 93 by turning ON/OFF the steering switch 56 arranged on the steering wheel 17. The states of the operation mode selector switch 55 and the steering switch 56 are obtained by the operation state controller 71 included in the driving assistance ECU 70 and the driving assistance ECU 70 performs the driving assistance control according to the state of the switch obtained by the operation state controller 71.

That is to say, the operation state controller 71 allows the assistance executing unit 80 to execute the driving assistance at the time of the entrance to the intersection 93 when the operation mode selector switch 55 is in the auto mode and when the operation mode selector switch 55 is in the manual mode and the steering switch 56 is turned ON. On the other hand, the operation state controller 71 prevents the assistance executing unit 80 from executing the driving assistance when the operation mode selector switch 55 is in the manual mode and the steering switch 56 is turned OFF.

Therefore, when the operation mode selector switch 55 is switched to the auto mode, the driving assistance device 2 performs the driving assistance control each time this determines that the vehicle 1 enters the intersection 93 at which the driving assistance is required based on the travel state of the vehicle 1 and the driving state of the driver.

On the other hand, when the operation mode selector switch 55 is switched to the manual mode, the driving assistance device 2 performs the driving assistance control when the own vehicle 1 enters the intersection 93 at which the driving assistance is determined to be required in the state in which the steering switch 56 is turned ON. When the operation mode selector switch 55 is switched to the manual mode and the steering switch 56 is turned OFF, the driving assistance device 2 does not perform the driving assistance control even when the own vehicle 1 enters the intersection 93 at which the driving assistance is determined to be required.

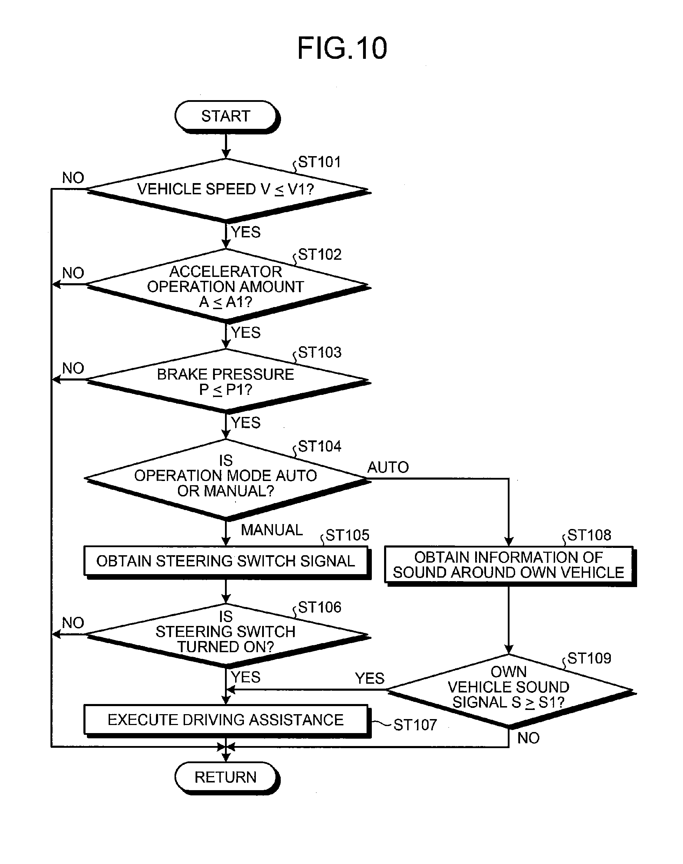

FIG. 10 is a flow diagram when the driving assistance device according to the embodiment provides the driving assistance. Next, a procedure when the driving assistance device 2 according to this embodiment provides the driving assistance is schematically described. Meanwhile, a following process is called every predetermined time at the time of the travel control of the vehicle 1 to be executed. When a flow of the driving assistance is called while the vehicle 1 travels, it is first determined whether a vehicle speed V ≤ V1 is satisfied (step ST101). The intersection determining unit 75 included in the driving assistance ECU 70 determines this.

The intersection determining unit 75 compares a current vehicle speed V being the vehicle speed information obtained by the vehicle speed obtaining unit 63 of the travel control ECU 60 with a predetermined reference speed V1 to determine whether the vehicle speed V is not higher than the reference speed V1. Meanwhile, the reference speed V1 is set in advance as a reference value when it is determined whether there is the intersection 93 at which the driving assistance is required based on the vehicle speed to be stored in the storage unit of the driving assistance ECU 70. When the intersection determining unit 75 determines that the vehicle speed V ≤ V1 is not satisfied (No at step ST101), that is to say, when the vehicle speed V is determined to be higher than the reference speed V1, it exits from the procedure.

On the other hand, when the intersection determining unit 75 determines that the vehicle speed V ≤ V1 is satisfied (Yes at step ST101), the intersection determining unit 75 next determines whether an accelerator operation amount A ≤ A1 is satisfied (step ST102). The intersection determining unit 75 compares a current accelerator operation amount A obtained by the accelerator opening degree obtaining unit 64 of the travel control ECU 60 with a predetermined reference value A1 to determine whether the accelerator operation amount A is not larger than the reference value A1. Meanwhile, the reference value A1 is set in advance as a reference value when it is determined whether there is the intersection 93 at which the driving assistance is required based on the accelerator operation amount to be stored in the storage unit of the driving assistance ECU 70. When the intersection determining unit 75 determines that the accelerator operation amount A ≤ A1 is not satisfied (No at step ST102), that is to say, when the accelerator operation amount A is determined to be larger than the reference value A1, it exits from the procedure.

On the other hand, when the intersection determining unit 75 determines that the accelerator operation amount A ≤ A1 is satisfied (Yes at step ST102), the intersection determining unit 75 next determines whether brake pressure P ≤ P1 is satisfied (step ST103). The intersection determining unit 75 compares the brake pressure P obtained by the brake operation obtaining unit 65 of the travel control ECU 60 as a current brake operation amount with a predetermined reference value P1 to determine whether the brake pressure P is not higher than the reference value P1. Meanwhile, the reference value P1 is set in advance as a reference value when it is determined whether there is the intersection 93 at which the driving assistance is required based on the brake operation amount to be stored in the storage unit of the driving assistance ECU 70. When the intersection determining unit 75 determines that the brake pressure P ≤ P1 is not satisfied (No at step ST103), that is to say, when the brake pressure P is determined to be higher than the reference value P1, it exits from the procedure.

On the other hand, when the intersection determining unit 75 determines that the brake pressure P ≤ P1 is satisfied (Yes at step ST103), it is next determined whether the operation mode of the driving assistance device 2 is the auto mode or the manual mode (step ST104). The operation state controller 71 included in the driving assistance ECU 70 determines this. The operation state controller 71 obtains the state of the operation mode selector switch 55 to determine whether the mode selected by the operation mode selector switch 55 is the auto mode or the manual mode.

When the manual mode is selected by the operation mode selector switch 55 (step ST104, manual), the operation state controller 71 next obtains a signal of the steering switch 56 (step ST105). When obtaining the signal of the steering switch 56, the operation state controller 71 determines whether the obtained signal is ON (step ST106). When the operation state controller 71 determines that the steering switch 56 is not turned ON (No at step ST106), that is to say, when this determines that the steering switch 56 is turned OFF, it exits from this procedure.

On the other hand, when it is determined that the steering switch 56 is turned ON (Yes at step ST106), the driving assistance is executed (step ST107). That is to say, the warning controller 81 included in the assistance executing unit 80 of the driving assistance ECU 70 controls the warning device 50 to provide the reminder that the moving object 96 is present and the like. That is to say, the warning controller 81 controls the warning device 50 based on the state of the moving object 96 such as the approaching vehicle 97 detected by the sound information obtained by the microphone controller 73 to display the reminder by the display unit 51 of the warning device 50 or emit the warning sound from the buzzer 52. According to this, the driver recognizes the moving object 96 to perform the driving operation to avoid the collision.

When the intersection determining unit 75 determines that the vehicle speed V, the accelerator operation amount A, and the brake pressure P are not higher than V1, A1, and P1, respectively (Yes at steps ST101, ST102, ST103) and when the auto mode is selected by the operation mode selector switch 55 (step ST104, auto), the sound information around the own vehicle 1 is next obtained (step ST108). That is to say, the microphone controller 73 controls the microphone 32 and each of a plurality of microphones 32 detects the sound information to obtain the sound information around the own vehicle 1. In more detail, the sound information including the reverberating sound of the sound emitted from the own vehicle 1 is obtained by the microphone 32.

Next, it is determined whether an own vehicle sound signal S ≥ S1 is satisfied (step ST109). The assistance determining unit 76 included in the driving assistance ECU 70 determines this. The assistance determining unit 76 derives the own vehicle sound signal S being a signal of the reverberating sound of the sound emitted by the own vehicle 1 from the sound information around the own vehicle 1 obtained by the microphone controller 73 based on the power spectrum (refer to FIGS. 8-1 and 8-2) and the correlation value (refer to FIGS. 9-1 and 9-2). The assistance determining unit 76 compares the own vehicle sound signal S derived in this manner with a predetermined reference value S1 to determine whether the own vehicle sound signal S is not lower than the reference value S1.

Meanwhile, the reference value S1 is set in advance as the reference value when it is determined whether the driving assistance is not required because the state of the obstacle around the own vehicle 1 is the state in which the excellent visibility can be obtained based on the reverberating sound of the sound emitted by the own vehicle 1 to be stored in the storage unit of the driving assistance ECU 70.

When the assistance determining unit 76 determines that the own vehicle sound signal S ≥ S1 is not satisfied (No at step ST109), that is to say, when the own vehicle sound signal S is determined to be smaller than the reference value S1, it exits from the procedure. That is to say, when the own vehicle sound signal S is smaller than the reference value S1, this means that there is not many obstacles around the own vehicle 1, the view is clear, and the visibility of the crossing road 92 from the travel road 91 is excellent. Therefore, in such a case, the assistance determining unit 76 determines not to provide the driving assistance.

On the other hand, when the assistance determining unit 76 determines that the own vehicle sound signal S ≥ S1 is satisfied (Yes at step ST109), the warning controller 81 controls the warning device 50 to execute the driving assistance (step ST107). In this case, the assistance determining unit 76 determines the assistance level at the time of the execution of the driving assistance based on the own vehicle sound signal S. The determined assistance level is transmitted to the warning controller 81 and the warning controller 81 controls the warning device 50 according to the transmitted assistance level. According to this, the warning device 50 executes the driving assistance of the assistance level according to the state of the obstacle such as the shielding material 102 around the own vehicle 1, that is to say, the assistance level according to the visibility of the crossing road 92. The driver appropriately recognizes the moving object 96 moving on the crossing road 92 to perform the driving operation to avoid the collision by the driving assistance.

The driving assistance device 2 according to the above-described embodiment detects the sound information around the vehicle 1 by the microphone 32 and determines whether the driving assistance can be executed and determines the assistance level by the assistance determining unit 76 based on the reverberating sound when the sound emitted from the vehicle 1 is reverberated by the obstacle located in the vicinity of the intersection 93. According to this, the assistance executing unit 80 can provide just enough driving assistance according to the visibility of the crossing road 92 from the travel road 91. As a result, it is possible to inhibit the execution of the driving assistance in a scene other than the intersection 93 at which the driving assistance is required.

Since the driving assistance is not provided or the assistance level is decreased when the view from the travel road 91 is clear, it is possible to inhibit the execution of the driving assistance more than necessary when the situation of the crossing road 92 is visible. As a result, it is possible to reduce burden due to unnecessary execution of the driving assistance.

Since the driving assistance is executed when it is determined that there is the obstacle such as the shielding material 102 in the vicinity of the intersection 93 based on a detection result of the sound information by the microphone 32, it is possible to surely execute the driving assistance at the intersection 93 with poor visibility of the crossing road 92 from the travel road 91. As a result, it is possible to more surely inhibit the execution of the driving assistance in a scene other than the intersection 93 at which the driving assistance is required.

### [Variation]

Meanwhile, although the microphone 32 is used as the environment information obtaining means in the driving assistance device 2 according to the above-described embodiment, another environment information obtaining means may also be used in addition to the microphone 32 as the environment information obtaining means which obtains environment information around an own vehicle 1. In this case, a camera capable of imaging a surrounding area of the own vehicle 1 and radar which detects a target by using a detection wave such as an electromagnetic wave, infrared light, and a laser may be used, for example, as another environment information obtaining means. The environment information obtaining means may include the microphone 32 which detects sound information used for determining presence of an obstacle such as a shielding material 102 and this can further obtain the environment information around the own vehicle 1 with a higher degree of accuracy by using something which can obtain the environment information around the own vehicle 1 other than the microphone 32.

Although the sound emitted from the own vehicle 1 at the time of the driving of the own vehicle 1 such as the engine sound of the own vehicle 1 is used as the sound used for determining availability of the driving assistance or the assistance level in the driving assistance device 2 according to the above-described embodiment, the sound used for determining the availability of the driving assistance and the like may be another sound. For example, it is also possible to emit a dedicated sound used for determining the availability of the driving assistance and the like from the own vehicle 1 and detect a reverberating sound of the sound by the microphone 32, thereby determining a state of an obstacle to determine the availability of the driving assistance and the like.

Although the driving assistance to the driver is only the warning using the warning device 50 in the driving assistance device 2 according to the above-described embodiment, the driving assistance may also be provided by a method other than this. For example, it is also possible to provide the driving assistance to avoid contact between a moving object 96 such as an approaching vehicle 97 and the own vehicle 1 by adjusting driving force and braking force regardless of driving operation of the driver and transmitting steering torque facilitating steering in a safe direction to the driver through an EPS device 12. Any method of assisting may be used as the driving assistance as long as this may realize safe travel of the own vehicle 1.

Although the driving assistance device 2 according to the above-described embodiment determines whether the vehicle 1 travels toward the intersection 93 at which the driving assistance is required based on the travel state thereof and the state of the driving operation of the driver, an order of determining whether current values of the states are reference values or lower is not limited to the above-described order. That is to say, although it is determined in order of the vehicle speed, the accelerator operation amount, and the brake pressure (steps ST101 to ST103) in the above-described procedure, the order may be other than the above-described order. It is possible to realize the determination whether the vehicle 1 travels toward such intersection 93 by a simple configuration by determining whether this travels towards the intersection 93 at which the driving assistance is required based on the travel state thereof and the state of the driving operation of the driver regardless of the order of determining.

In the driving assistance device 2 according to the above-described embodiment, it is determined whether the operation mode is the auto mode or the manual mode (step ST104) and whether the signal of the steering switch 56 is ON (step ST106); however, the determination is not necessarily performed. When the determination is not performed, a procedure may be such that the sound information around the own vehicle 1 is obtained (step ST108) when it is determined that brake pressure P ≤ P1 is satisfied (Yes at step ST103).

The driving assistance device 2 may be obtained by appropriately combining the configuration and control used in the above-described embodiment and variation or by using the configuration and control other than those described above. Regardless of the configuration and the control method of the driving assistance device 2, it is possible to inhibit execution of the driving assistance in a scene other than the intersection 93 at which the driving assistance is required by obtaining the sound information around the own vehicle 1 by the microphone 32 and determining the availability of the driving assistance and the assistance level based on the obtained sound information.

### Reference Signs List

- 1: Vehicle
- 2: Driving assistance device
- 5: Engine
- 10: Brake hydraulic control device
- 12: EPS device
- 15: Accelerator pedal
- 16: Brake pedal
- 21: Vehicle speed sensor
- 22: Accelerator sensor
- 23: Brake pressure sensor
- 32: Microphone
- 50: Warning device
- 55: Operation mode selector switch
- 56: Steering switch
- 60: Travel control ECU
- 61: Engine controller
- 62: Brake controller
- 63: Vehicle speed obtaining unit (vehicle speed obtaining means)
- 64: Accelerator opening degree obtaining unit
- 65: Brake operation obtaining unit
- 66: Rudder angle obtaining unit
- 70: Driving assistance ECU
- 71: Operation state controller
- 73: Microphone controller
- 75: Intersection determining unit
- 76: Assistance determining unit (assistance determining means)
- 80: Assistance executing unit (driving assistance means)
- 81: Warning controller
- 83: Notification controller
- 100: Open space
- 102: Shielding material

## Claims

1. A driving assistance device comprising:
a microphone mounted on an own vehicle and configured to detect sound information around the own vehicle;
a driving assistance means configured to execute driving assistance; and
an assistance determining means configured to determine whether the driving assistance is executed and determine an assistance level at the time of executing the driving assistance, based on a reverberating sound of a sound emitted from the own vehicle and included in the sound information detected by the microphone.

2. The driving assistance device according to claim 1, wherein
the assistance determining means determines to execute the driving assistance at the time it is determined that there is an obstacle around the own vehicle, based on the reverberating sound of the sound emitted from the own vehicle and included in the sound information by the microphone.

3. The driving assistance device according to claim 2, wherein
the assistance determining means determines to execute the driving assistance at the time it is determined that there is the obstacle and determines not to execute the driving assistance at the time it is determined that there is no obstacle.

4. The driving assistance device according to claim 2, wherein
the assistance determining means determines to increase the assistance level at the time it is determined that there is the obstacle as compared to a case in which it is determined that there is no obstacle.
